Europäisches Patentamt

European Patent Office

Office européen des brevets

(11) Veröffentlichungsnummer: **0 423 729 A2**

# EUROPÄISCHE PATENTANMELDUNG

(21) Anmeldenummer: 90119843.2

(22) Anmeldetag: 16.10.90

(51) Int. Cl.5: **B65D 30/08**

(30) Priorität: 18.10.89 DE 8912350 U

(43) Veröffentlichungstag der Anmeldung:
24.04.91 Patentblatt 91/17

(84) Benannte Vertragsstaaten:
AT BE CH DE ES FR GB IT LI NL

(71) Anmelder: STIEGLER GMBH
MASCHINENFABRIK
Am Burren
W-7062 Rudersberg(DE)

(72) Erfinder: Curbach, Oswald
Hasenweg 24
W-8011 Baldham(DE)

(74) Vertreter: Müller-Gerbes, Margot
Friedrich-Breuer-Strasse 112
W-5300 Bonn 3 (Beuel)(DE)

(54) Tragetasche als Mehrwegartikel auf Basis thermoplastischer schweissbarer Kunststoffe.

(57) Die Erfindung betrifft eine Tragetasche als Mehrwegartikel mit Wänden aus flächigen Gebilden auf
Basis thermoplastischer schweißbarer Kunststoffe
mit einem Durchgriff zum Tragen im Bereich der
Taschenöffnung, wobei die Wände längs einer oder
beider Seitenkanten und/oder Bodenkante, sofern
diese nicht als Faltkante ausgebildet sind, miteinander verschweißt sind und wobei die Wände aus
einem Vlies mit einem Flächengewicht von etwa 15
bis 150 g/m² auf Basis von Polyolefinfasern oder
Polyolefinfibriden bestehen.

Fig. 1

# TRAGETASCHE ALS MEHRWEGARTIKEL AUF BASIS THERMOPLASTISCHER SCHWEISSBARER KUNST-STOFFE

Die Erfindung bezieht sich auf eine Tragetasche als Mehrwegartikel mit Wänden aus flächigen Gebilden auf Basis thermoplastischer schweißbarer Kunststoffe mit einem Durchgriff zum Tragen im Bereich der Taschenöffnung, wobei die Wände längs einer oder beider Seitenkanten und/oder Bodenkante, sofern diese nicht als Faltkante ausgebildet sind, miteinander verschweißt sind.

Tragetaschen der gattungsgemäßen Art werden bisher aus schweißbaren Kunststoffolien, beispielsweise Polyethylenfolien in vielfältiger Ausführungsform hergestellt. Hierbei wird von Folien oder Schlauchfolien ausgegangen, die ggf. zu Halbschläuchen umgeschlagen und dann in der Beutelbreite oder den Beutellängen entsprechenden Abständen durch Querschweißen abgeteilt werden, wobei die Schweißnähte die Seitennähte oder Bodennähte der so hergestellten Beutel oder Tragetaschen bilden.

Im Zuge der Vermeidung von Müll und Abfallbildung durch Einmalartikel stellt sich die Aufgabe, auch die vielfältig und umfangreich verwendeten Tragetaschen und Beutel aus Kunststoffolien für einen Dauergebrauch, zumindest jedoch einen Mehrfachgebrauch auszurüsten. Hierbei stellt sich die Aufgabe, bei Einsatz geeigneter Materialien die bewährten Herstellungsverfahren beim Herstellen von Beuteln aus schweißbaren Kunststoffolien und insbesondere das Verschweißen der Seitenkanten und/oder Bodenkanten beizubehalten.

Diese Aufgabe wird gemäß der Erfindung durch eine Tragetasche gelöst, bei der die Wände aus einem Vlies (non-woven-fabrics) auf Basis von Polyolefinen-Fasern oder Polyolefinfibriden bestehen und die Vliese ein Flächengewicht von etwa 15 bis 150 g/m² aufweisen Hierbei ist insbesondere an Fasern oder Fibride aus Polypropylen oder Polyethylen gedacht, da diese auf der Basis eines Massenkunststoffes preiswert herstellbar sind. Bevorzugt werden Homopolymerisate des Polypropylens mit einem Schmelzindex FMI (230/5) von etwa 19 bis 80 g/10 Min.

Fasern aus thermoplastischen Polymeren werden je nach thermischer Stabilität und/oder Löslichkeit des Polymeren im Schmelzspinnverfahren aus der Schmelze, im Trockenspinnverfahren aus der Lösung in den Heißluftschacht zwecks Verdampfung des Lösungsmittels oder im Naßspinnverfahren aus der Lösung in ein Fällbad durch Vielloch-Düsen als Spinnkabel aus zahlreichen Elementarfäden abgezogen, und zu Endlosfasern verstreckt. Aus den thermoplastischen Endlosfasern kann man dann mit oder ohne Bindemittel auf trockenem Wege Faser-Vliese erheblicher Festigkeit oder aus Fibriden papierartige Vliese herstellen. Unter Fibriden werden feine zellstoffähnliche Fäserchen verstanden, die insbesondere durch Abscheiden aus Lösungen unter Scherung erzeugt werden. Sie zeichnen sich dadurch aus, daß sie wasserabstoßend sind und daher zum Herstellen feuchtfester papierartiger Gebilde eingesetzt werden.

Die Herstellung von Polyolefin-Microfaservliesen ist beispielsweise in der US-Patentschrift 3755 527, britischen Patentschrift 1055 187, US-Patentschrift 3978 185 unter anderem beschrieben.

Vorteilhafte Ausgestaltungen der Erfindung sind den kennzeichnenden Merkmalen des Ansprüche 2 bis 10 entnehmbar. Schmelzgeblasene Vliese aus thermoplastischen Fasern aus Polyolefinen sind hydrophob, so daß sie in der Regel ohne zusätzliche hydrophobe Ausrüstung, die an Tragetaschen gestellten Anforderungen der Feuchtigkeitsabweisung und Schmutzabweisung erfüllen. Darüber hinaus sind derartige Vliese aus Microfasern atmungsaktiv, so daß mit erfindungsgemäßen Tragetaschen auch beispielsweise Lebensmittel gut transportiert und gelagert werden können. Obwohl derartige Vliese aus Microfasern nicht aufquellen, weil sie hydrophob sind, sind sie dennoch in der Lage, eine gewisse Menge an Feuchtigkeit aufzunehmen, so daß sie nicht sofort durchnässen. Das ausgewählte Flächengewicht der Vliese richtet sich nach dem Anwendungsgebiet der Tragetaschen. Mit Vorteil können die beim Herstellen der Vliese erzeugten und immanenten unterschiedlichen Reißfestigkeiten in Längserstreckung und Quererstreckung der Vliese ausgenutzt werden bei der Herstellung der Tragetaschen, indem die höheren Reißfestigkeiten der Vliese in Längserstreckung der Tasche von der Bodenkante zur Durchgriffsöffnung verlaufend eingesetzt werden. Derartige Tragetaschen sind insbesondere die als Bodennahtbeutel oder Hemdchenbeutel bekannten Tragetaschen. Sie eignen sich damit zum Tragen besonders hoher Lasten auch für den Mehrfachgebrauch.

Vliese auf Basis von Polyolefinfasern oder -fibriden sind an sich bekannt und erhältlich. Beim Verschweißen derartiger Vliese miteinander, wie es bei der Herstellung von Tragetaschen aus Folienbahnen zum Schließen der Seitenkanten und/oder Bodenkanten erforderlich ist, stellt sich jedoch das Problem, das Verschweißen in ausreichend kurzer Zeit ohne Verbrennung von Fasern durchzuführen. Um Tragetaschen in wirtschaftlicher Weise herzustellen, werden heute Schweißeinrichtungen zum Schweißen von Kunststoffolien eingesetzt, die in der Lage sind, bis zu 160 Schweißnähte pro Minute mit Schweißbalken oder dergleichen auszuführen. Hierbei werden die Folienbahnen mit Geschwindigkeiten bis zu 65 m/Min. bewegt, wobei eine Strecke mit intermittierendem Bahnvorschub eingebaut ist. Das Verschweißen ist insofern schwierig, weil in den Vliesen erheblich Luft eingeschlossen ist, wodurch der Wärmeübergang und damit der Schmelzvorgang unterschiedlich verzögert und erschwert wird bzw. örtliche Überhitzungen auftreten, die zu Verbrennungen führen, so daß keine einheitliche bzw. durchgängige Schweißnaht erzielbar ist.

Dieses Problem wird bei der erfindungsgemäßen Tragetasche dadurch gelöst, daß die Vliese mittels steppartiger bzw. gestochener Schweißnähte verbunden sind. Auf diese Weise kann auf wirtschaftliche Weise eine Tragetasche geschaffen werden, die für mehrfachen längerfristigen Gebrauch benutzbar ist, die leicht ist, wenig Raum einnimmt und preiswert herstellbar ist. Damit ist ein Beitrag zur Abfallverhinderung im Bereich der umfangreich beim täglichen Einkauf zum Einsatz kommenden Tragetaschen und Beutel aus Kunststoffen geleistet.

Bevorzugt werden Tragetaschen, die aus einem spinngebundenen Polypropylenfaservlies oder aus einem feuchtfesten papierartigen Vlies aus Polypropylen-Fibriden bestehen. Derartige Tragetaschen weisen eine hohe Reißfestigkeit auf. Bei einem eingesetzten Microfaservlies aus Endlosfasern mit 3 den aus Polypropylen von 70 g/m² beträgt die Reißfestigkeit in Längsrichtung des Vlieses 160 N/5cm und in Querrichtung 85 N/5 cm. Hierbei wurde ein Polypropylen-Homopolymerisat mit einem MFI (230/5) von 40 g/10 Min. eingesetzt.

Beispielsweise können Bodennahtbeutel mit hoher Reißfestigkeit hergestellt werden, wenn die Vliese in Längserstreckung mit der höheren Reißfestigkeit so verarbeitet werden, daß diese Längserstreckung sich mit der Längserstreckung des Beutels bzw. Tragetasche vom Boden zur Öffnung deckt.

Die für die Tragetaschen eingesetzten Vliese können ein Flächengewicht im Bereich von 15g/m² bis 150 g/m² aufweisen. Das richtet sich auch nach der Form und Größe und Einsatzgebiet der Tragetaschen.

Die erfindungsgemäße Tragetasche kann vielfältige Gestalt aufweisen. Ausführungsbeispiele sind nachfolgend in der Zeichnung anhand der Figuren 1 bis 20 in verschiedenen Ausführungsformen in der Ansicht dargestellt.

Es zeigen
Figur 1 eine Seitennaht-Tragetasche
Figur 2 eine Seitennaht-Tragetasche mit Bodenfalte
Figur 3 eine Seitennaht-Tragetasche und Stulprand
Figur 4 eine Seitennaht-Tragetasche mit überstehendem geradem Verblockungsrand
Figur 5 eine Seitennaht-Tragetasche mit überstehendem Sinus-Verblockungsrand
Figur 6 eine Seitennaht-Tragetasche gemäß Figur 4 mit Blockboden
Figur 7 eine Seitennaht-Tragetasche mit Sinusrand
Figur 8 eine Seitennaht-Tragetasche mit Sinus-Stulprand
Figur 9 eine Bodennaht-Tragetasche mit Seitenfalten
Figur 10 Tragetasche mit Blattverstärkung, innen geschweißt
Figur 11 Tragetasche mit Randverstärkung, geklebt oder geschweißt
Figur 12 Tragetasche mit Doppelspritzgußgriff
Figur 13 Bodennaht-Beutel, los, mit Seitenfalte, gelocht
Figur 14 Bodennaht-Beutel, verblockt, Aufhängelöcher und Abreißperforation
Figur 15 Bodennaht-Beutel, flach, mit Sparverblockung und Abreißperforation
Figur 16 Bodennaht-Beutel mit Seitenfalte, mit Sparverblockung und Abreißperforation
Figur 17 Hemdchen-Tragetasche
Figur 18 Hemdchen-Tragetasche, verblockt, mit Perforation und Aufhängelöchern
Figur 19 Hemdchen-Tragetasche, verblockt, mit Perforation und Aufhängelöchern
Figur 20 Tragebeutel mit Bodennaht, verblockt, Aufhängelöcher und Abreißperforation, Griffloch-Bananenform.

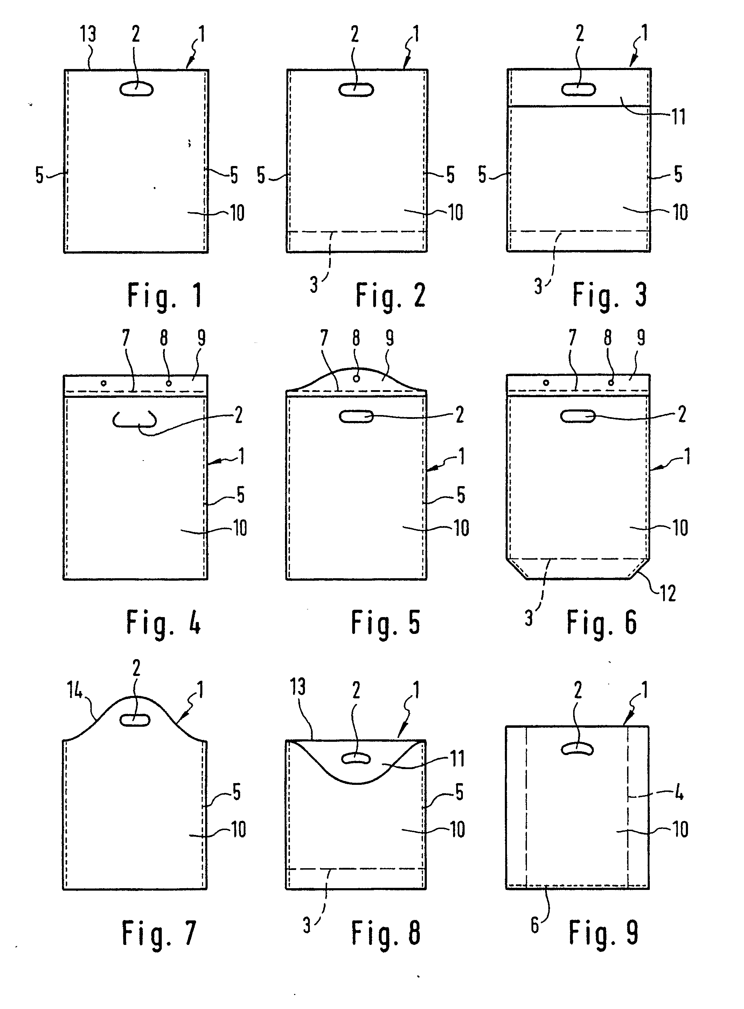

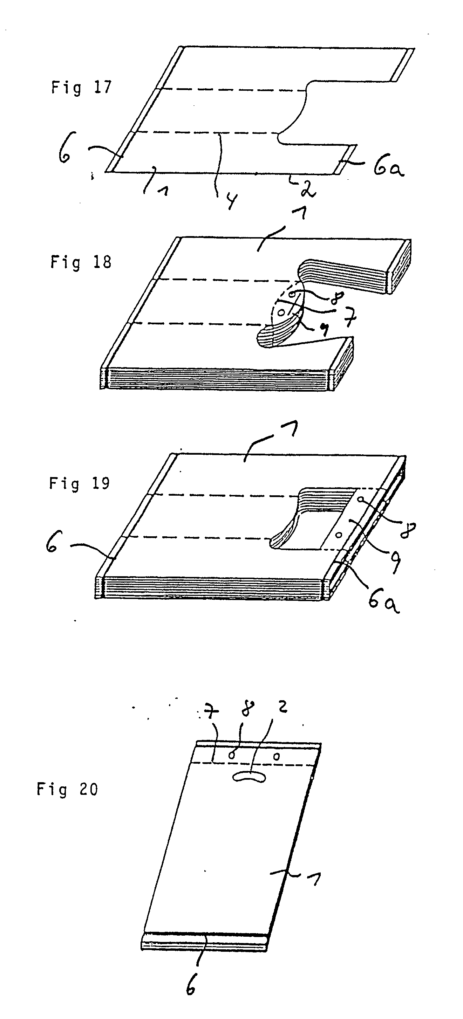

Die in der Zeichnung dargestellten Tragetaschen 1 weisen als Durchgriff zum Tragen, sofern vorhanden, das Griffloch bzw. Griffschlitz 2 oder eine Griffleiste 17 auf. Die Wände 10 sind aus einem Vlies auf Basis von Polyolefinfasern oder Polyolefinfibriden, wie beispielsweise Polypropylen, gefertigt. Je nach Fertigungsmethode und Konstruktion weisen die Taschen 1 geschweißte Seitennähte 5, siehe Figuren 1 bis 8 und Figur 10 bis 12, oder eine Bodenschweißnaht 6, siehe Figur 9 bis 20, auf. Die dem Griffloch 2 benachbarte Tragetaschenöffnung kann mit geradem Rand 13, siehe beispielsweise Figuren 1 bis 3 und 9 10 bis 16, 20, oder mit einem welligen, wie sinusförmigen Rand 14 gemäß Figur 7 und 17 ausgebildet sein. Es ist auch möglich, im Bereich der Taschenöffnung zur Verstärkung des Griffloches 2 einen Umschlag 11 vorzusehen, der nach innen oder außen geklappt ist, wie beispielsweise in Figur 3 in gerader Ausführung dargestellt, oder aber auch durch Umschlagen eines sinusförmigen Tragerandes, siehe Figur 8, nach innen oder außen. Der Umschlag 11 wird bevorzugt an den Wänden 10 angeschweißt, entweder mit den Seitennähten oder im Bereich um das Griffloch 2 herum.

Sofern die Tragetaschen als verblockter Pak-

ken vorliegen sollen, kann eine der Wände mit einem über die andere Wand über die Tragetaschenöffnung vorstehenden Randstreifen 9, siehe Figuren 4 bis 6, ausgebildet sein. Dieser Randstreifen 9 weist dann parallel zur Tragetaschenöffnung die Abreißperforation 7 auf, entlang der die Tragetasche 1 von dem Randstreifen 9 abgetrennt werden kann. Die einzelnen Tragetaschen sind über den Randstreifen 9 miteinander verblockt, wobei Aufhängelöcher 8 vorgesehen sein können. Auch dieser Randstreifen kann je nach Fertigung eine unterschiedliche Gestalt aufweisen.

Die Tragetaschen können darüber hinaus mit eingelegten Bodenfalten 3, siehe Figur 2, 3, 6, 8, 10, 11, 12 oder auch mit eingelegten Seitenfalten 4, siehe Figur 9, ausgerüstet sein. Es ist auch möglich, durch Eckschweißnähte 12 in den Bodenfalten 3 gemäß Figur 6 einen Stehboden auszubilden.

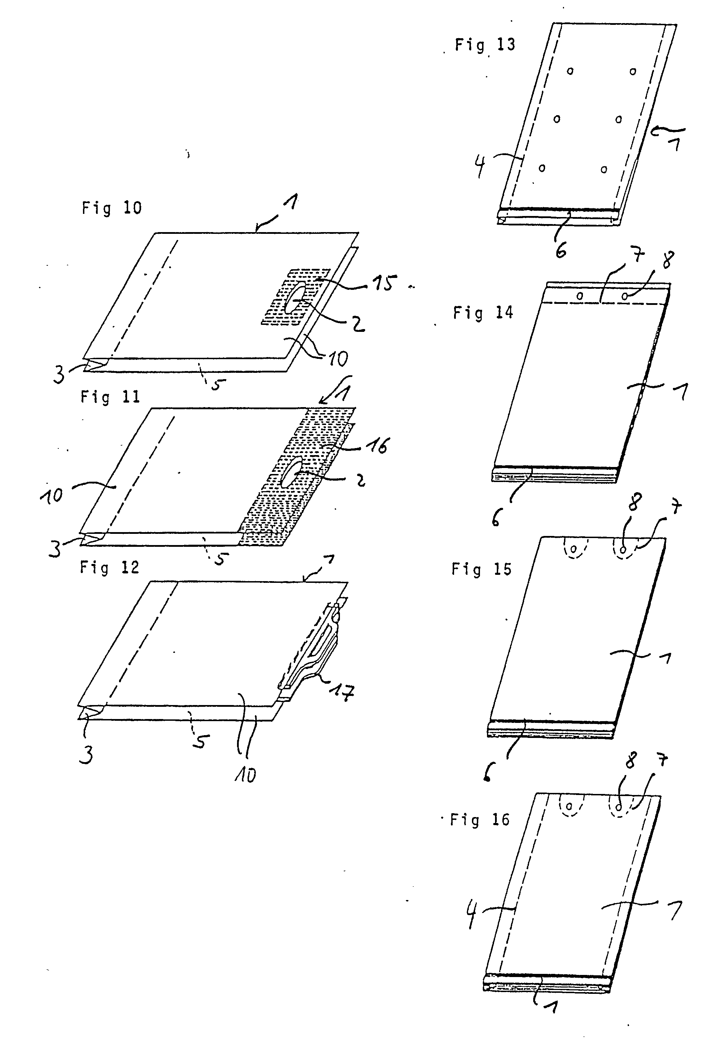

Die Tragetasche 1 mit Seitenschweißnähten 5 nach Fig. 10 -schematisiert noch offen dargestellt - weist eine zusätzliche Blattverstärkung 15 des Griffloches 2 auf, die angeschweißt oder angeklebt sein kann. Bei der Tragetasche 1 mit Seitenschweißnähten 5 nach Fig. 11 ist in Abwandlung von Figur 10 der ganze Randbereich durch einen zusätzlich aufgebrachten Randstreifen 16 verstärkt. Die Verstärkung 15, 16 kann innen oder außen aufgebracht sein und aus Vlies oder Folie bevorzugt aus dem jeweils gleichen Kunststoff der Tragetasche bestehen. Bei der Tragetasche 1 mit Seitenschweißnähten 5 nach Fig. 12 ist eine Griffleiste 17 an der Taschenöffnung angeschweißt bzw. angeklebt.

Die Fig. 13 bis 16 und 20 zeigen Bodennaht-Beutel 1, mit oder ohne Griffloch mit geschweißter Bodennaht 6, die mit Abreißperforation 7, Aufhängelöchern 8 ausgestattet sein können und lose oder zu Packen verblockt werden. Die Fig. 17 bis 19 zeigen Hemdchen-Tragetaschen, mit Bodenschweißnaht 6 und Schweißnähten 6a an der Oberseite an den Schlaufen, ggf. Verblockungsstreifen 9, Abreißperforation 7 und Aufhängelöcher 8, sowie Seitenfalten 4, in losen oder verblockten Packen. Der Durchgriff erfolgt über Schlitze 2 unterhalb der Schlaufen-Schweißnähte 6a.

Weitere Varianten und Ausführungsformen der erfindungsgemäßen Tragetasche aus Vliesen mit geschweißten Seiten- und/oder Bodennähten sind möglich und nicht auf die dargestellten Ausführungsbeispiele beschränkt.

**Ansprüche**

1. Tragetasche als Mehrwegartikel mit Wänden aus flächigen Gebilden auf Basis thermoplastischer schweißbarer Kunststoffe mit einem Durchgriff zum Tragen im Bereich der Taschenöffnung, wobei die Wände längs einer oder beider Seitenkanten und/oder Bodenkante, sofern diese nicht als Faltkante ausgebildet sind, miteinander verschweißt sind,
dadurch gekennzeichnet, daß die Wände aus einem Vlies mit einem Flächengewicht von etwa 15 bis 150 g/m$^2$ auf Basis von Polyolefinfasern oder Polyolefinfibriden bestehen.

2. Tragetasche nach Anspruch 1,
gekennzeichnet durch ein schmelzgesponnenes aus dünnen thermoplastischen molekularorientierten etwa 1:16 bis 1:22 verstreckten Endlosfasern mit einem Durchmesser von etwa 2,5 bis 3,5 den bestehendes und hydrophobes Vlies mit einem Flächengewicht von etwa 15 bis 100 g/m$^2$, das durch zumindest punktweise Schmelzprägungen verfestigt ist.

3. Tragetasche nach Anspruch 1 oder 2,
gekennzeichnet durch ein Vlies aus einem Polypropylen mit einem Schmelzindex MFI (230/5) von etwa 19 bis 80 g/10 Min.

4. Tragetasche nach einem der Ansprüche 1 bis 3,
dadurch gekennzeichnet, daß das Vlies in Längserstreckung des Vlieses eine höhere Reißfestigkeit aufweist als in Quererstreckung des Vlieses und die Vliese in der Weise zu der Tragetasche verarbeitet sind, daß das Vlies mit der Längserstreckung mit der höheren Reißfestigkeit sich vom Boden der Tasche zur Taschenöffnung hin erstreckt.

5. Tragetasche nach Anspruch 1,
gekennzeichnet durch ein aus Schmelz geblasenen thermoplastischen Microfasern mit einem durchschnittlichen Durchmesser bis zu etwa 25 μm bestehendes hydrophobes Vlies mit einem Flächengewicht von etwa 20 bis 120 g/m$^2$, das durch zumindest punktweise Schmelzprägungen verfestigt ist.

6. Tragetasche nach Anspruch 5,
dadurch gekennzeichnet, daß ein Vlies aus einem Polypropylen mit einem Schmelzindex MFI (230/5) von etwa 20 bis 80 g/10 Min. vorgesehen ist.

7. Tragetasche nach Anspruch,
dadurch gekennzeichnet, daß als Vlies ein feuchtfestes papierartiges Vlies aus Polypropylenfibriden vorgesehen ist.

8. Tragetasche nach einem der Ansprüche 1 bis 7,
dadurch gekennzeichnet, daß die Vliese längs der Seitenkanten bzw. Bodenkanten durch steppartige Schweißnähte verbunden sind.

9. Tragetasche nach einem der Ansprüche 1 bis 8,
dadurch gekennzeichnet, daß die Vliese mittels Ultraschall verschweißt sind.

10. Tragetasche nach einem der Ansprüche 1 bis 9,
dadurch gekennzeichnet, daß die Vliese, soweit sie nicht von Natur aus hydrophob sind, hydrophob ausgerüstet sind oder mit einer hydrophoben Beschichtung versehen sind.

Fig. 1

Fig. 2

Fig. 3

Fig. 4

Fig. 5

Fig. 6

Fig. 7

Fig. 8

Fig. 9

Fig 10

Fig 11

Fig 12

Fig 13

Fig 14

Fig 15

Fig 16

Fig 17

Fig 18

Fig 19

Fig 20